# EUROPEAN PATENT APPLICATION

(11) **EP 1 628 001 A1**
(43) Date of publication of application: **22.02.2006**
(21) Application number: 04735384.2
(22) Date of filing: 28.05.2004
(51) Int. Cl.: F01P 11/10, F01P 5/06, B60K 11/04, E02F 9/00

(54) **CONSTRUCTION MACHINE BOTTOM GUARD, CONSTRUCTION MACHINE ENGINE ROOM CONSTRUCTION AND CONSTRUCTION MACHINE COOLING DEVICE**

(30) Priority: 28.05.2003 JP 2003151519
(71) Applicant: Shin Caterpillar Mitsubishi Ltd., Tokyo 158-0097 (JP)
(72) Inventor: SHIGEMOTO, Toshiyuki c/o Shin Caterpillar, Setagaya-ku, Tokyo 1580097 (JP); SAKAI, Makoto c/o Shin Caterpillar, Setagaya-ku, Tokyo 1580097 (JP); YAMADA, Kyoko c/o Shin Caterpillar, Setagaya-ku, Tokyo 1580097 (JP)
(74) Representative: Klingseisen, Franz
(86) International application number: PCT/JP2004/007760
(87) International publication number: WO 2004/106710

(57) **Abstract**

The present invention relates to the bottom guard, engine room structure, and cooling system in a construction machine. The bottom guard (23A) is mounted on a bottom portion (23) while facing an engine room (2B) through which air for cooling a cooling package (24) flows by operation of a cooling fan (25). The bottom guard (23A) is made up of a bottom guard main body (23B) and a guide member (23C). The bottom guard main body (23B) is mounted on the bottom portion (23) so as to cover the interior of the engine room (2B), and has a cooling-air discharge opening (23Ba). The guide member (23C) is disposed on an inside surface of the bottom guard main body (23B) mounted on the bottom portion (23) which faces the interior of the engine room (2B), so as to cover the cooling-air discharge opening (23Ba). The guide member (23C) is also used for guiding the cooling air discharged from the cooling fan (25), from the outer periphery of the cooling fan (25) to the cooling-air discharge opening (23Ba). The cooling air in a centrifugal direction, which occupies the greater part of the cooling air discharged from the cooling fan (25), is guided out of the engine room (2B) by the guide member (23C), so it is discharged smoothly out of the engine room (2B).

## Description

### TECHNICAL FIELD

The present invention relates to the bottom guard in a construction machine which is mounted on a bottom portion while facing an engine room, and to the engine room structure and cooling system in a construction machine using the bottom guard.

### BACKGROUND ART

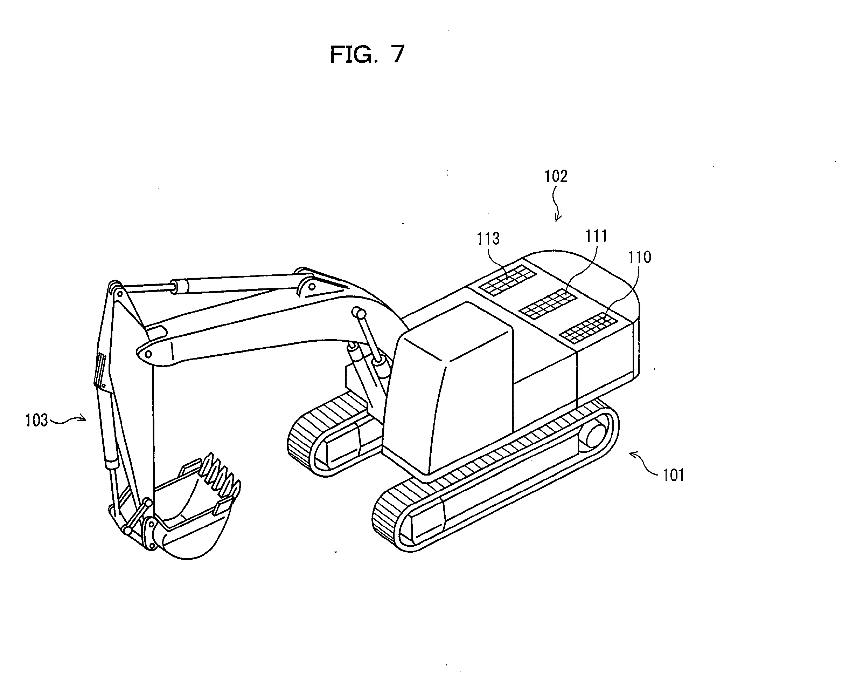

A wide variety of construction machines, such as a hydraulic shovel, travel construction machines (excavator, back hoe and wheel loader, etc.), stationary construction machines (folk-lift, crane, etc.), etc., are employed in various fields such as construction sites, harbors, factories, etc. For example, a hydraulic shovel, which is a travel construction machine, is made up of a travel base 101, a revolving superstructure 102 revolvably arranged on the travel base 101, and an operating arm 103 extending from the revolving superstructure 102 to perform various operations, as shown in Fig. 7.

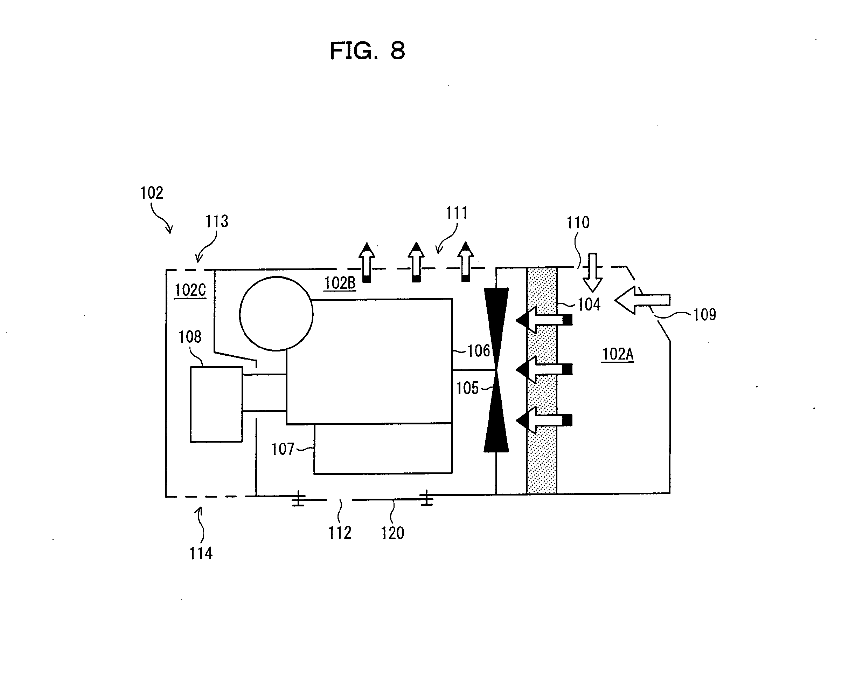

Now, the revolving superstructure 102 will be described with reference to Fig. 8 where the internal construction of a typical engine room is shown. As shown in the figure, the revolving superstructure 102 contains an engine 106, a hydraulic pump 108, etc. The operating arm 103 (see Fig. 7) is operated with the hydraulic pressure produced by the hydraulic pump 108 driven by the engine 106.

Construction machines are typically used in a severe environment, such as digging of stones and rocks in dams, tunnels, rivers, and roads, dismantling of buildings and structures, etc. In such an environment, the load exerted on the engine 106, hydraulic pump 108, and other components is high and can cause a rise in engine temperature or working-oil temperature. For this reason, in these constructionmachines, as shown in Fig. 8, a cooling package 104 consisting of a radiator or oil cooler of relatively large capacity is provided in the flow passage where the cooling air generated by the fan 105 driven with the engine 106 flows. And with the cooling package 104, engine cooling water and working oil are cooled (e.g., see Japanese Laid-Open Utility Model Publication No. Hei 3-83324 (patent document 1)).

That is, with rotation of the fan 105, air (cooling air) is introduced through the upper openings 109, 110 of a radiator room 102A in which the cooling package 104 is installed. The cooling air cools engine cooling water or working oil when passing through the core of the cooling package 104 of fin structure.

A main engine room 102B has an opening 111 in the top surface and an opening 112 in the bottom surface, at predetermined positions away from the fan 105 in the fan axial-flow direction (right-and-left direction in Fig. 8) . The opening 111 consists of a plurality of openings arranged in the form of a mesh or louver and has a relatively great width in the above-described fan axial-flow direction. On the other hand, the opening 112 in the bottom surface is formed as a single opening having a relatively large area, and is formed in a bottom guard 120 mounted on the engine room bottom surface to protect the equipment (such as the oil pan 107, etc.) within the main engine room 102B.

In a pump room 102C in which the hydraulic pump 108 is installed, openings 113, 114 are formed in the top surface and bottom surface, respectively. These openings 113, 114 consist of a plurality of openings arranged in the form of a mesh or louver, as with the opening 111 of the main engine room 102B.

The air, cooling the engine cooling water and working oil and reaching a high temperature, is discharged out of the engine room through the discharge openings 111, 112 of the main engine room 102B, or passes through the main engine room 102B and is discharged out of the engine room through the discharge openings 113, 114 of the pump room 102C.

Particularly, in hydraulic shovels, it has been found that the air flow discharged from the fan 105 to the main engine room 102B includes almost no component in the fan axial-flow direction and that the main components of the air flow are the components in the centrifugal direction and components in the revolving direction (hereinafter referred to as the components in the centrifugal/revolving direction).

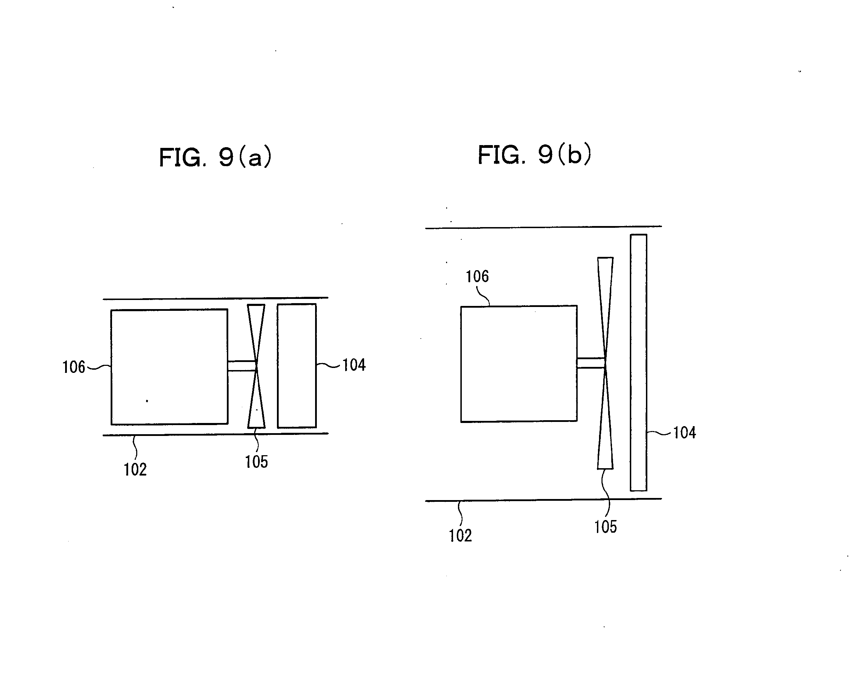

The reasons will hereinafter be described with reference to Figs. 9(a) to 12(b).

In the case of the hydraulic shovel, the space that can mount a cooling package 104 and an engine 106 in the interior of the revolving superstructure 102 is as shown in Fig. 9 (a) and narrow compared with the space of another construction machine shown in Fig. 9(b). Particularly, the cross section perpendicular to the fan axial-flow direction is small. The reason is that if the height of the engine room is increased, the field of vision from a driver's seat in front of the engine room to the rear will be intercepted and that if the width in the fore-and-aft direction of the engine room becomes longer, the construction machine rear end will become great in turning radius and become inconvenient to use in a narrow site.

Thus, the cross section of the engine room in the hydraulic shovel is relatively small, so the thickness of the cooling package 104 is increased to assure the contact area between the cooling package 104 and cooling air and consequently the cooling performance of the cooling package 104. As a result, the pressure resistance that the cooling air undergoes when passing through the cooling package 104 is relatively great.

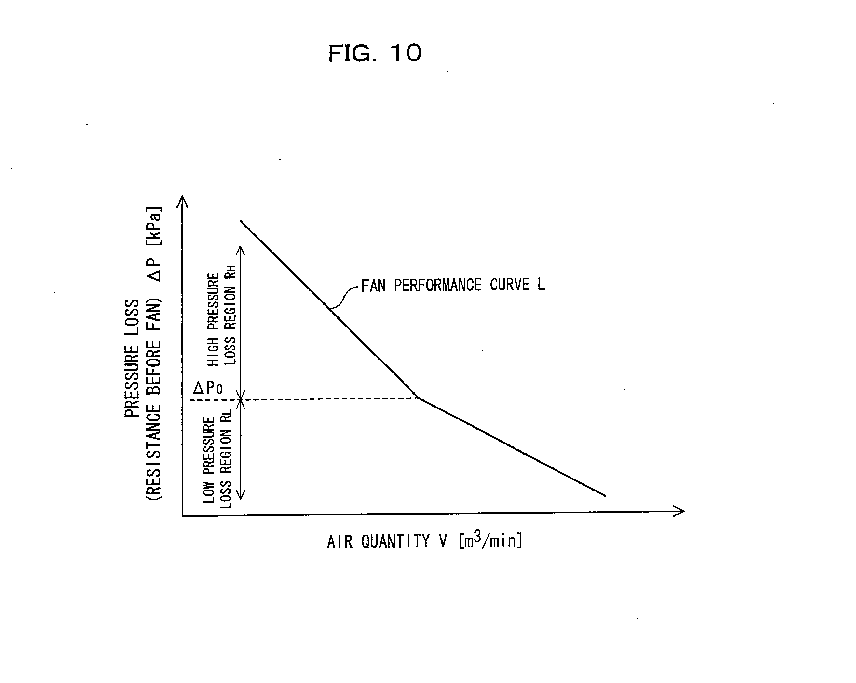

In construction machines, axial fans are typically used to suppress costs and an increase in size. Fig. 10 shows the performance curve of a typical axial fan. As seen in the performance curve L, in axial fans, if the pressure loss ΔP at the fan upstream side increases, an air quantity V per unit time tends to decrease. The air quantity V means an air quantity transferred from the fan upstream side to the fan downstream side, so if the pressure loss ΔP at the fan upstream side increases, an axial flow that is a straight flow from the fan upstream side to the fan downstream side is particularly hard to obtain.

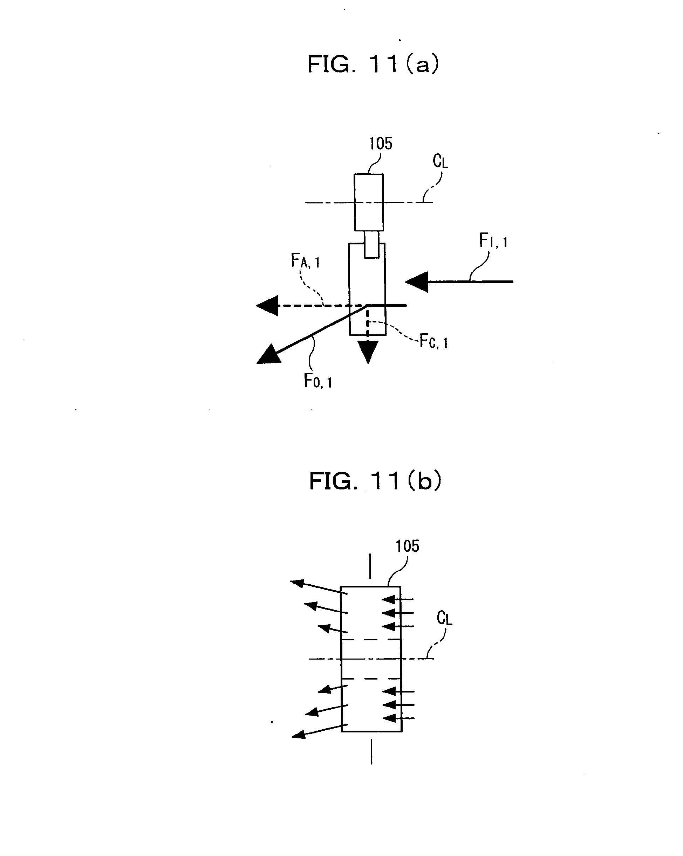

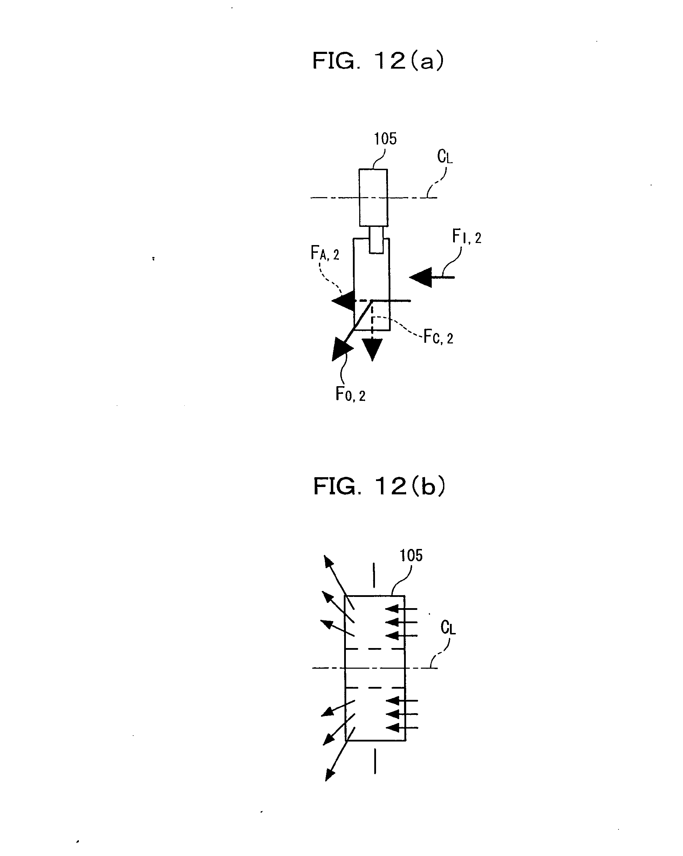

For that reason, when the pressure loss ΔP at the fan upstream side is in a low pressure loss region R_{L} less than a predetermined value ΔP₀, the flow of the cooling air is as shown in Figs. 11(a) and 11(b). When the pressure loss ΔP at the fan upstream side is in a high pressure loss region R_{H} equal to or great than the predetermined value ΔP₀, the flow of the cooling air is as shown in Figs. 12(a) and 12(b). (In Figs. 11(a) to 12(b), the right-and-left direction is shown so as to coincide with the fan axial-flow direction, and in Figs. 11 (a) and 12 (a), only the lower side from the center line C_{L} of the fan is shown.)

That is, in the low pressure loss region R_{L}, an air quantity is relatively great. Therefore, as shown in Fig. 11 (a), a relatively great air quantity represented by vector F_{I,1} is generated at the fan upstream side in the axial direction. At the fan downstream side, a flow represented by vector F_{o,1} is generated. That is, the component in the axial-flow direction represented by vector F_{A,1} is greater than the component in the centrifugal/revolving direction represented by vector F_{C,1}. And the air quantity becomes greater toward the centrifugal side, as indicated by vectors in Fig. 11(b).

In the high pressure loss region R_{H}, an air quantity is relatively small. Therefore, as shown in Fig. 12(a), a relatively small air quantity represented by vector F_{I,2} is generated at the fan upstream side in the axial direction. At the fan downstream side, a flow represented by vector F_{O,2} is generated. That is, the component in the centrifugal/revolving direction represented by vector F_{C,2} is greater than the component in the axial-flow direction represented by vector F_{A,2}. And the air quantity becomes greater toward the centrifugal side, as indicated by vectors in Fig. 12(b).

The above-described relationship between the pressure loss ΔP at the fan upstream side and the flow of the cooling air at the fan downstream side has been confirmed by experiments and simulations.

In the above-described hydraulic shovel, the cooling package is thick and therefore the pressure loss ΔP at the fan upstream side is great. The cooling fan will be used in the high pressure loss region. Therefore, for the flow component of the cooling air at the fan outlet side, the component in the centrifugal/revolving direction will become greater.

However, in the above-described prior art shown in Figs. 7 and 8, as described above, the discharge opening 111 consisting of a plurality of openings arranged in the form of a mesh is disposed at a position away from the fan 105 in the fan axial-flow direction and has a width in the fan axial-flow direction. Therefore, the cooling air introduced into the main engine room 102B is caused to flow in the axial-flow direction until it is discharged.

That is, in this prior art, an air blow which tends to flow in the centrifugal/revolving direction is forced to flow in the axial-flow direction. For this reason, the pressure loss in the cooling air is relatively great, and consequently, the cooling air passed through the cooling package 104 cannot be smoothly discharged. Thus, there is a problem of the discharge efficiency being low.

To enhance the discharge efficiency, the area of the openings in the main engine room 102B can be increased. In this case, noise (leakage of engine sound, or leakage of air sound generated as the cooling air passes through the cooling package 104) will be increased, so that a new problem will arise.

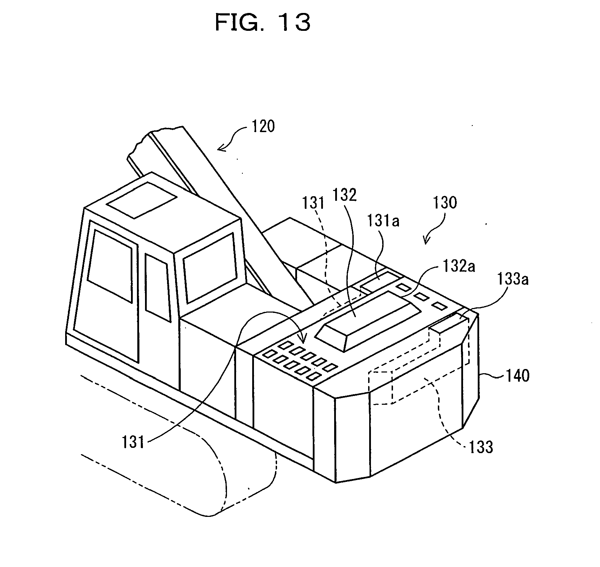

Hence, Japanese Laid-Open Patent Publication No. 2001-193102 (patent document 2) discloses a construction machine such as that shown in Fig. 13. In this construction machine, cooling-air passages (fan-air splitting flow passages and fan-air splitting ducts) 131 to 133 are formed in the top surface and side surfaces of an engine room 130. The inlets of the cooling-air passages 131 to 133 (the left ends in Fig. 13) are disposed in the vicinity of the outer periphery of the cooling fan. Such a structure is provided so that the cooling air discharged in the centrifugal/revolving direction from the cooling fan is efficiently discharged from a small number of openings, and so that an increase in noise from the engine room 130 is prevented.

However, the prior art of the aforementioned patent document 2 shown in Fig. 13 has the following problems.

That is, the side surfaces of the engine room 130 are provided with the cooling-air passages 131, 133. Therefore, when attaching the cooling-air passages 131, 133 to the outside of the engine room 130, as shown in Fig. 13, it is necessary to make a duct through a counterweight 140 and to provide space for the cooling-air passage 131 on the front side of the engine room. For this reason, there is a possibility that a size increase and structural intricacy of the construction machine will be caused. On the other hand, if the cooling-air passages 131, 133 on the side surfaces of the engine room 130 are attached to the inside of the engine room 130, an increase in the size of the engine room 130 will be caused.

Also, as shown in Fig. 13, the discharge openings 131a, 133a of the cooling-air passages 131, 133 of the engine room side surfaces are formed in the top surface of the engine room 130 along with the discharge opening 132a of the cooling-air passage (duct) 132. The inlets of the cooling-air passages 131 to 133 are disposed near the cooling fan and engine that are noise making sources. For this reason, there is a possibility that noise will be concentrated above the engine room 130 through these cooling-air passages 131 to 133 and grow louder locally.

In addition, horizontal noise from a construction machine can be suppressed if a working site is enclosed two-dimensionally with a shielding, for example. However, providing a shielding to suppress vertical noise is a large-scale operation and not practical. Part of horizontal noise can be absorbed by the ground and buildings, etc. However, there is no absorbing obj ect for vertical noise, so the propagation range (distance and direction that vertical noise propagates) is very large. Because the discharge openings 131a, 133a are vertically open, noise will be vertically discharged through these discharge openings 131a, 133a.

The present invention has been made in view of the problems mentioned above. Accordingly, it is the object of the present invention to provide a bottom guard, engine room structure, and cooling system of a construction machine that are capable of enhancing cooling-air discharge efficiency and reducing noise, while suppressing a size increase and structural intricacy of the construction machine.

### DISCLOSURE OF THE INVENTION

To achieve the aforementioned object of the present invention, there is provided a bottom guard in a construction machine which is mounted on a bottom portion while facing an engine room through which air for cooling a cooling package flows by operation of a cooling fan. The bottom guard comprises a bottom guard main body and a guide member. The bottom guard main body is mounted on the bottom portion so as to cover the interior of the engine room, and has a cooling-air discharge opening. The guide member is disposed on the inside surface of the bottom guard main body mounted on the bottom portion which faces the interior of the engine room, so as to cover the cooling-air discharge opening. The guide member is also used for guiding the cooling air discharged from the cooling fan, from the outer periphery of the cooling fan to the cooling-air discharge opening.

In the bottom guard of the present invention, a rectifying plate is preferably provided along an axial flow direction, between the bottom guard main body and the guide member.

An engine room structure in a construction machine of the present invention comprises an engine, a cooling package, a cooling fan for circulating air to cool the cooling package, and the aforementioned bottom guard.

A cooling system in a construction machine of the present invention comprises a cooling-air passage provided within an engine room of the construction machine, a cooling fan installed within the cooling-air passage for circulating cooling air, a cooling package installed within the cooling-air passage, and the aforementioned bottom guard.

According to the present invention, the cooling air in a centrifugal direction, which occupies the greater part of the cooling air discharged from the cooling fan, is guided out of the engine room by the guide member. Therefore, since the cooling air is discharged smoothly out of the engine room, cooling-air discharge efficiency can be enhanced. This makes it possible to reduce the total open area of the cooling-air discharge openings formed in the engine room and to abate noise compared with prior art.

By discharging cooling air from an opening formed in the bottom guard main body, the open area of the cooling-air discharge openings provided in the top surface of the engine room can be reduced. This makes it possible to prevent noise from growing louder locally above the engine room and to suppress noise generated upward.

The bottom guard is structurally simple because it is equipped with only the guide member, and the guide member is arranged by efficiently utilizing the exiting space provided under the engine and oil pan. Therefore, as compared with the case where a cooling-air discharge system is mounted on the engine room side wall, an enhancement in cooling-air discharge efficiency and a reduction in noise can be achieved while suppressing an increase in size and structural intricacy.

The engine sound propagating out of the engine room through an air passage formed by the guide member is absorbed by the guide member. The engine sound leaking out of the engine room through the wall surfaces of the engine room is intercepted doubly by the guide member and the bottom guard. Thus, noise can be reduced.

### BRIEF DESCRIPTION OF THE DRAWINGS

FIG. 1 is a perspective view showing a construction machine to which an embodiment of the present invention is applied;
FIG. 2 is a transverse sectional view showing a cooling system constructed in accordance with the embodiment of the present invention;
FIG. 3 is a side view showing the revolving superstructure of the construction machine shown in FIG. 1;
FIG. 4 is a perspective view showing the bottom guard of the cooling system of the embodiment;
FIG. 5 is a perspective view showing the engine room discharge openings and bulge of the cooling system of the embodiment;
FIG. 6 is a transverse sectional view showing a modification of the cooling system of the present invention;
FIG. 7 is a perspective view showing a conventional construction machine;
FIG. 8 is a transverse sectional view showing the engine room of the conventional construction machine shown in FIG. 7;
FIG. 9 (a) is a schematic diagram used to explain the relationship between the size of an engine room and the thickness of a cooling package in the cooling system of a constructionmachine, the engine roombeing relatively narrow;
FIG. 9 (b) is a schematic diagram used to explain the relationship between the size of an engine room and the thickness of a cooling package in the cooling system of another construction machine, the engine room being relatively wide;
FIG. 10 is a schematic diagram showing the performance curve of a typical axial cooling fan;
FIGS. 11(a) and 11(b) are schematic diagrams showing how cooling air flows before and after the cooling fanwhen pressure loss at the fan upstreamside is relatively small;
FIGS. 12(a) and 12(b) are schematic diagrams showing how cooling air flows before and after the cooling fanwhenpressure loss at the fan upstream side is relatively great; and
FIG. 13 is a perspective view showing the cooling system of another conventional construction machine.

### BEST MODE FOR CARRYING OUT THE INVENTION

An embodiment of the present invention will hereinafter be described with reference to the drawings.

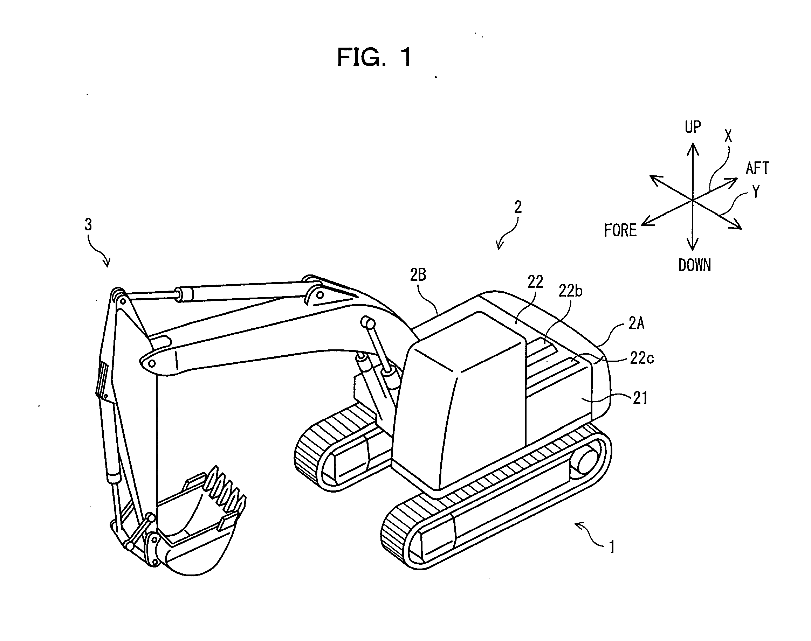

In Figs. 1 to 6 where the embodiment of the present invention is shown, an arrow X indicates the fore-and-aft direction of a construction machine (also referred to as an engine room width direction), and an arrow Y indicates the right-and-left direction of the construction machine (also referred to as a fan axial-flow direction).

Also, in the following embodiment, a description will be given in the case where the present invention is applied to a hydraulic shovel (construction machine).

A construction machine to which an embodiment of the present invention is applied will be described with reference to Fig. 1. The figure is a perspective view showing the entire construction machine.

The construction machine is made up of a travel base 1, a revolving superstructure 2 revolvably disposed on the travel base 1, and an operating arm 3 extending from the revolving superstructure 2 to perform various operations. The revolving superstructure 2 includes a counterweight 2A disposed at its rear end, and an engine room 2B disposed in front of the counterweight 2A.

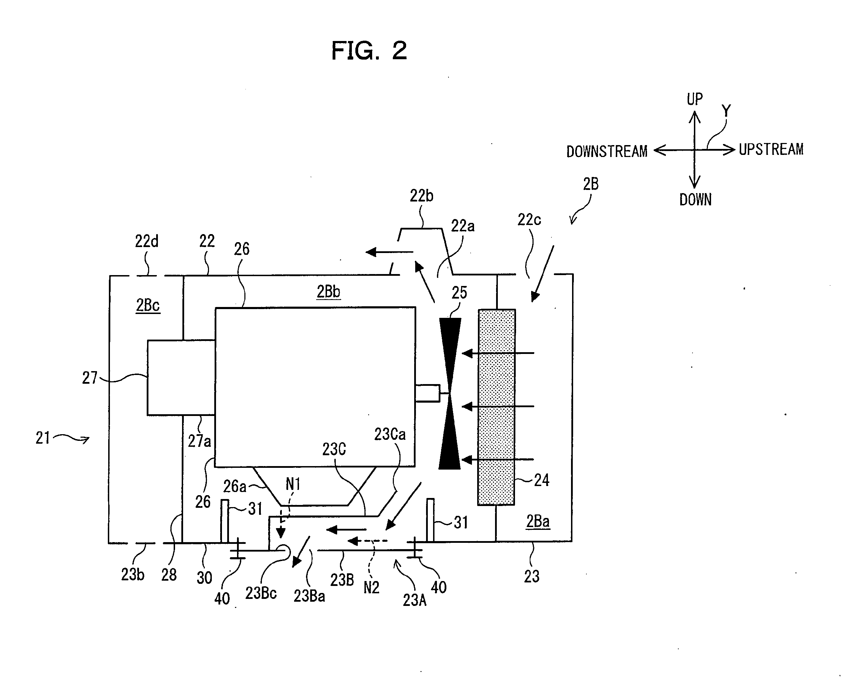

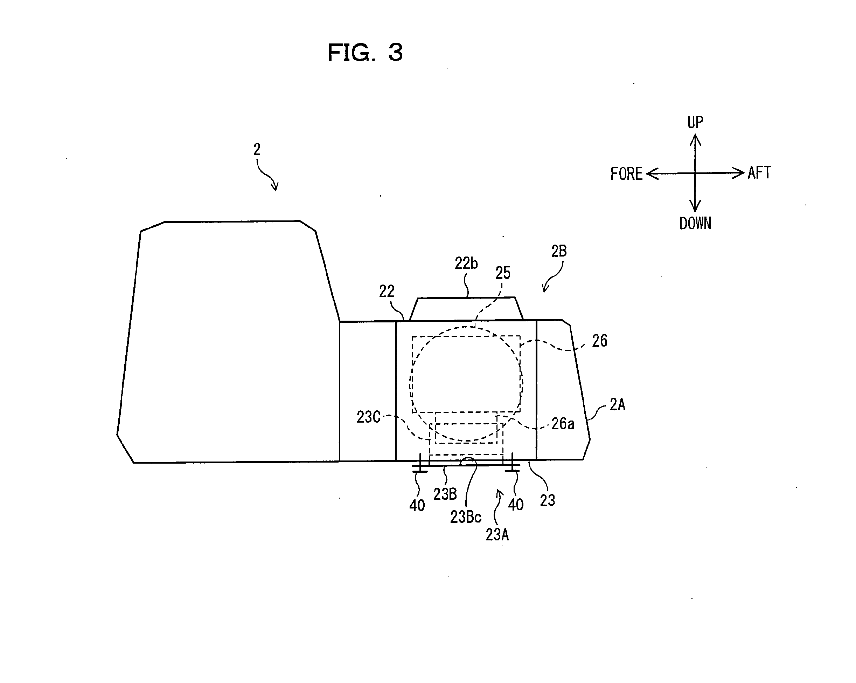

Next, the engine room 2B according to the embodiment of the present invention will be described with reference to Figs. 2 and 3. Fig. 2 is a transverse sectional view of the engine room 2B, and Fig. 3 is a side view of the revolving superstructure 2. In the engine room 2B, an engine 26 is installed so its crank shaft is in the right-and-left direction Y, and an axial cooling fan 25 is disposed to the right side of the engine 26. The cooling fan 25 is installed so its axial direction coincides with the right-and-left direction Y, and is used to deliver cooling air into a cooling-air passage defined by the interior space of the engine room 2B. In the embodiment shown in Fig. 2, cooling air is delivered toward the left side. The cooling fan 25 shown in Fig. 2 is an engine-driven type mechanically coupled with the engine crank shaft, but may be a hydraulic type.

A cooling package 24, such as a radiator, an oil cooler, etc., is installed on the upstream side (right side) in the axial-flow direction of the cooling fan 25. Also, a hydraulic pump 27 is mechanically coupled with the engine crank shaft and is installed on the downstream side (left side) in the axial-flow direction of the engine 26.

The interior of the engine room 2B is partitioned between the cooling package 24 and engine 26, and also between engine 2b and hydraulic pump 27. That is, the interior of the engine room 2B is divided into a radiator room 2Ba where the radiator (cooling package 24) is installed, a main room or main engine room 2Bb where the engine 26 and cooling fan 25 are installed, and a pump room 2Bc where the hydraulic pump 27 is installed.

The bottom wall surface or bottom surface 23 of the wall surface 21 forming the engine room 2B is provided with a bottom guard 23A, which faces the bottom portion of an oil pan 26a within the engine room 2B. The equipment within the engine room 2B, such as the oil pan 26a, etc., is protected from the splattered oil or water or stones, etc., from the ground by the bottom guard 23A.

The bottom guard 23A is detachably fixed on a swing frame 30 (i.e., a portion excluding the bottom guard 23A from a floor surface 23) between main rails 31, 31 by means of bolts 40. For example, when performing the maintenance of the oil pan 26a, the bottom guard 23A is removed from the swing frame 30 and the maintenance operation is performed through an opening formed in the swing frame 30.

Note that the engine 26 and oil pan 26a are mounted on the main rails 31 through support members (not shown) . Although main rails and support members are not shown in Fig. 8 where a conventional engine room is shown, an engine 106 is likewise mounted on the main rails. It is common practice to mount the engine on the main rails 31.

The bottom guard 23A is equipped with a bottom guard main body 23B, and a rectifier (guide member) 23C fixed on the bottom guard main body 23B. The bottom guard main body 23B is attached to the swing frame 30 so as to cover an opening formed in the swing frame 30, i.e., so as to cover the interior of the engine room 2B, and has an opening (cooling-air discharge opening) 23Ba.

The rectifier 23C is also mounted on the inside surface 23Bc of the bottom guard main body 23B. In the mounted state, the rectifier 23C is disposed under the oil pan 26a and disposed in space between the main rails 31, 31. As described above, the engine 26 is mounted on the main rails 31, 31 through support members (not shown), and this space is provided in prior art. That is, the rectifier 23C is arranged by efficiently utilizing the existing space.

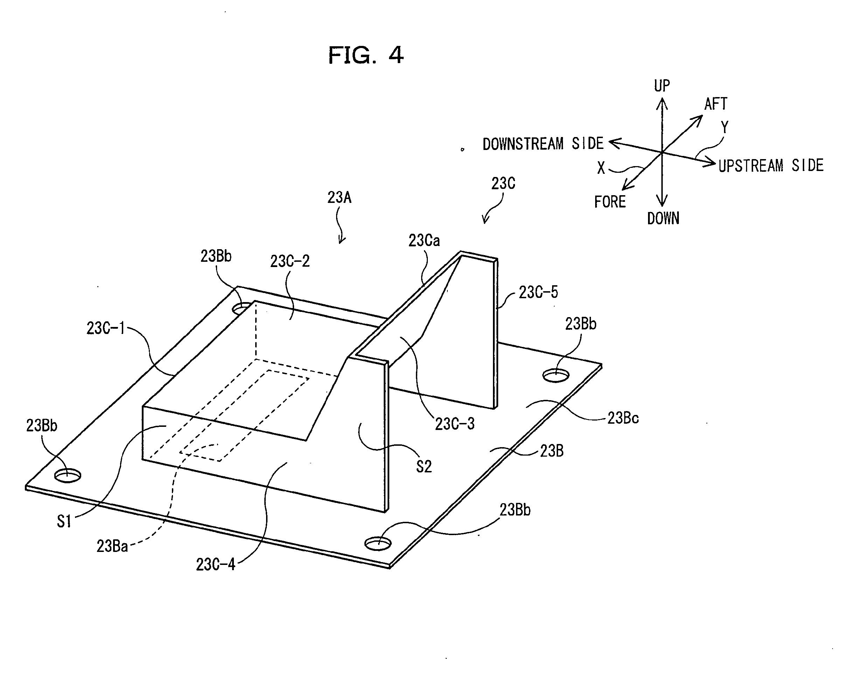

The configuration and position of the rectifier 23C are set so that when the rectifier 23C is mounted within the engine room main body 21, one end 23Ca (i.e., the top end of an inclined surface 23C-3 and top ends of side surfaces 23C-4, 23C-5 shown in Fig. 4) is disposed at the same, or nearly the same, position as the cooling fan 25 with respect to the fan axial-flow direction Y and at a position a predetermined distance away from the cooling fan 25 in the radial direction of the cooling fan 25. In this example, the one end 23Ca is disposed directly below the cooling fan 25 with respect to the fan axial-flow direction Y. That is, position of the one end 23Ca is just down the stream of the cooling fan 25.

On the other hand, the top wall surface 22 facing the radiator room 2Ba is provided with an opening (introduction opening) 22c. The top wall surface 22 facing the main engine room 2Bb is also provided with an opening (discharge opening) 22a. And a bulge 22b is mounted on the outside of the top wall surface 22 so as to cover the discharge opening 22a.

The discharge opening 22a is disposed around the outer periphery of the cooling fan 25, as with the cooling-air introduction opening of the bottom guard 23A. That is, the discharge opening 22a is disposed at the same, or nearly the same, position as the cooling fan 25 with respect to the fan axial-flow direction (right-and-left direction) Y. In the embodiment shown in Fig. 2, the opening 22a is positioned directly below the cooling fan 25 with respect to the fan axial-flow direction Y.

The upstream end of the bulge 22b near the radiator room 2Ba is open, and the downstream end near the pump room 2Bc is open. The cooling air, discharged from the engine room 2B through the engine room discharge opening 22a, is deflected in the horizontal direction (or in approximately the horizontal direction) and in a direction opposite to the cooling-airintroduction opening 22c with respect to the fan axial-flow direction Y by the bulge 22b and is discharged out of the engine room 2B.

Now, the bottom guard 23A and bulge 22b will be described in further detail.

Initially, the bottom guard 23A will be described in further detail with reference to Fig. 4. The figure shows a perspective view of the bottom guard 23A. The arrows on the right side of the figure indicate the directions where the bottom guard 23A is mounted within the engine room main body 21.

The bottom guard main body 23B is a square plate member and has a cooling-air discharge opening 23Ba near its downstream end. The cooling-air discharge opening 23Ba is formed into a slit that is long in the engine room width direction X. Also, the four corners of the bottom guard main body 23B have holes 23Bb for inserting the aforementioned bolts 40, respectively.

The rectifier 23C is fixed on the bottom guard main body 23B so as to cover the cooling-air discharge opening 23Ba in the engine room width direction X and the fanaxial-flowdirectionY. With the rectifier 23C mounted on the swing frame 30, the rectifier 23C consists of a vertical surface 23C-1 disposed at its downstream end, a horizontal surface 23C-2 extending from the top end of the vertical surface 23C-1 in parallel with the bottom guard main body 23B, an inclined surface 23C-3 extending upward from the horizontal surface 23C-2 to the vicinity of the cooling fan 25, and side surfaces 23C-4, 23C-5 disposed in the engine room width direction X. The front side surface 23C-4 is the same as the rear side surface 23C-5 in shape. Each side surface has a first part S1 coupled with the surfaces 23C-1 to 23C-3, and a second part S2 extending upstream from the first part S1.

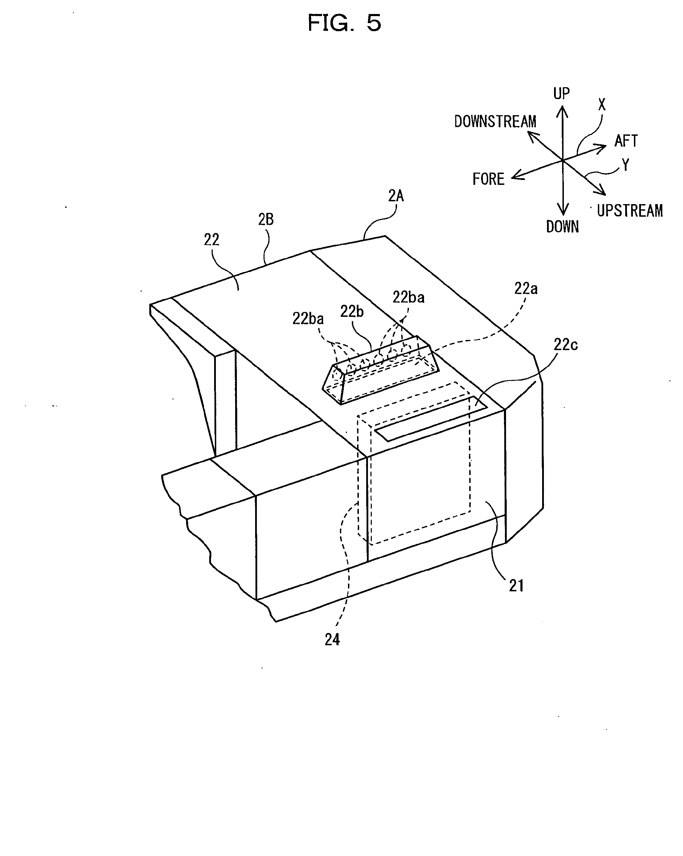

Now, the cooling-air introduction opening 22c, engine room discharge opening 22a, and bulge 22b will be described in further detail with reference to Fig. 5 where the upper portion of the engine room 2B is shown.

As shown in Fig. 5, the cooling-air introduction opening 22c and engine roomdischarge opening 22a are formed as slit-shaped openings, which are long in the fore-and-aft direction X. The bulge 22b is in the form of approximately a box long in the engine room width direction X. With the bulge 22b mounted on the top wall surface 22, the bulge 22b is open to the engine room discharge opening 22a, and the downstream end in the fan axial-flow direction Y of the bulge 22b has a plurality of openings 22ba (discharge holes) relatively short in the engine room width direction X (e.g., circular openings in this example), which are juxtaposed along the engine room width direction X.

And in the engine room structure shown in Fig. 2, air (cooling air) is introduced into the engine room 2B (cooling-air passage) through the introduction opening 22c by operation of the cooling fan 25 and is passed through the cooling package 24. Thereafter, the cooling air is discharged out of the engine room 2B through the engine room discharge opening 22a and bottom guard discharge opening 23Ba. The cooling air cools cooling water and the working oil of the hydraulic pump 27 when passing through the cooling package 24.

Thus, the cooling system of the present invention is made up of the introduction opening 22c, engine room 2B (chambers 2Ba, 2Bb, and 2Bc within the engine room main body 21), cooling package 24, cooling fan 25, discharge opening 22a, bulge 22b, and bottom guard 23A.

Note that part of the cooling air introduced into the engine room 2B flows into the pump room 2Bc through the gap between the connecting rod 27a (which extends between the engine 26 and hydraulic pump 27) and the partition wall 28 (which is disposed between the main engine room 2Bb and pump room 2Bc). For this reason, the top surface 22 and bottom surface 23, which face the pump room 2Bc), are provided with openings 22d and 23b in the form of a mesh. The cooling air flowing in the pump room 2Bc is discharged out of the engine room through the openings 22d and 23b.

Since the cooling system of this embodiment is constructed as described above, cooling air is discharged out of the engine room 2B, as shown in Fig. 2.

That is, as previously indicated, the pressure loss at the cooling package 24 is relatively great, so most of the cooling air sent out of the cooling fan 25 will revolve but flow in approximately the centrifugal direction, as indicated by arrows.

Hence, in the cooling system of this embodiment, the upstream end 23Ca of the rectifier 23C of the bottom guard 23A (which forms the inlet of the air passage formed by the rectifier 23C) is disposed in the direction where the cooling air flows. Therefore, the cooling air send out of the cooling fan 25 can be guided to the cooling-air discharge opening 23Ba by the rectifier 23C without undergoing direct resistance. Therefore, cooling-air discharge efficiency can be enhanced.

Similarly, the engine room discharge opening 22a is formed in a portion of the top wall surface 22 where the cooling air sent out from the cooling fan 25 flows and strikes. Therefore, cooling-air discharge efficiency can be enhanced.

As a result of an enhancement in the cooling-air discharge efficiency, the open area of the engine room 2B can be reduced, whereby leakage of engine sound and air sound generated as cooling air passes through the cooling package 24 (hereinafter referred to as engine sound), that is, leakage of engine noise can be suppressed. In addition, since the pressure loss of the cooling air can be reduced, costs can be reduced by relaxing specifications for the cooling fan 25. Furthermore, cooling-air discharge efficiency is enhanced, so even if the cooling fan 25 of the same specifications is used, the air quantity can be increased and specifications for the heat exchange area of the cooling package 24 can be relaxed.

Part of the engine sound is transmitted through the rectifier 23C and bottom guard main body 23B and discharged as noise, as indicated by an arrow N1 in Fig. 2. However, since the noise is intercepted by the rectifier 23C, the noise can be suppressed compared with the conventional bottom guard structure (which consists of only the bottom guard main body 23B of this embodiment) .

The engine sound also propagates through the space formed between the bottom guard main body 23B and the rectifier 23C, as indicated by an arrow N2. However, the engine sound is absorbed and attenuated by the bottom guard main body 23B and rectifier 23C. The length in the fan axial-flow direction Y of the rectifier 23C is set to a predetermined length or greater so that the effect of reducing noise is sufficiently obtained (e.g., so that the engine sound becomes smaller than a predetermined value). In addition, the position of the opening 23Ba in the bottom guard main body 23B that practically prescribes the axial length of the rectifier 23C is preferably set to a downstream side in the fan axial-flow direction Y.

The cooling air discharged out of the engine room 2B through the engine room discharge opening 22a is deflected in the horizontal direction by the bulge 22b and is then discharged out of the engine room. Therefore, the direction of the engine sound (noise) that is discharged from the bulge 22b is deflected in the horizontal direction.

Thus, if the propagation direction of noise is deflected in the horizontal direction, noise will be absorbed by buildings and the ground and a working site around the construction machine can be enclosed in the horizontal direction by a shielding. Therefore, the propagation range (propagation direction and distance) of noise can be narrowed (spreading of noise can be suppressed).

In the prior art disclosed in the aforementioned patent document 2, as described above, the discharge openings 131a and 133a of the cooling-air passages 131 and 133 of the engine room side surfaces are formed in the engine room top surface along with the discharge opening 132a of the cooling-air passage 132, so there is a possibility that noise will be concentrated above the engine room and grow louder locally. In addition, since the cooling-air passages 131 and 133 are provided on the engine room side walls, it is necessary to install the counterweight 140. Therefore, there is a possibility that structural intricacy of the construction machine will be caused.

In contrast to this, the cooling system of the present invention have the discharge openings (bulge discharge openings) 22ba and 23Ba in the top wall surface 22 and bottom wall surface 23 of the engine room 2B. Therefore, since noise is dispersed above and below the engine room 2B, noise can be kept from growing louder locally.

Also, in the cooling system of the present invention, the bottom guard is provided with only the rectifier. Thus, since the cooling system of the present invention is structurally simple, the engine room structure can be made simpler compared with the prior art disclosed in the aforementioned patent document 2.

In addition, the rectifier 23C is arranged in the space, defined by the oil pan 26a and main rails 31, 31, which is provided in prior art. Therefore, the above-described advantages are obtainable without increasing the size of the engine room 2B.

While the present invention has been described with reference to the preferred embodiment thereof, the invention is not to be limited to the details given herein, but may be modified within the scope of the invention hereinafter claimed.

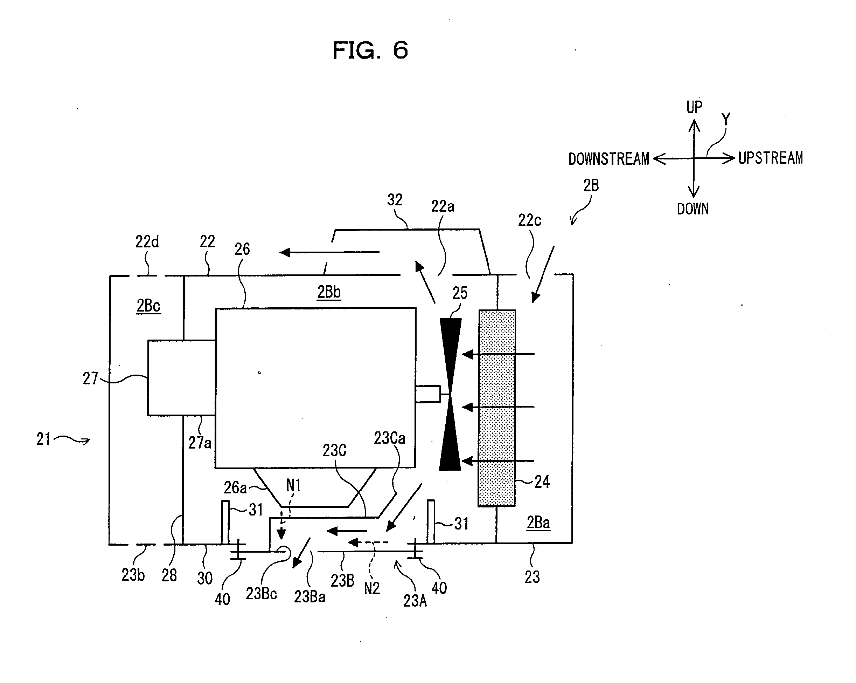

For example, in the above-described embodiment, the bulge 22b is mounted on the top wall surface 22. However, as shown in Fig. 6, a duct 32 extending downstream beyond the engine room discharge opening 22a in the fan axial-flow direction may be used instead of the bulge 22. This makes it possible to absorb noise propagating out of the engine room through the engine room discharge opening 22a by the interior wall surface of the duct 32.

In the above-described embodiment, the bottom guard 23 is fixed on the swing frame 30 by bolts, and during maintenance, the bottom guard 23 is completely removed from the swing frame 30. However, for example, the bottom guard 23 may be attached to the swing frame 30 through hinges so that it can open and close an opening formed in the swing frame 30.

In addition, partition plates may be provided so that the cooling-air passage between the bottom guard main body 23B and the rectifier 23c is divided in the engine roomwidthdirectionX. These partition plates can prevent the cooling air from flowing in the engine room width direction X. As a result, the back pressure of the cooling air can be reduced.

## Claims

1. A bottom guard in a construction machine which is mounted on a bottom portion (23) while facing an engine room (2B) through which air for cooling a cooling package (24) flows by operation of a cooling fan (25), comprising:
a bottom guard main body (23B) mounted on said bottom portion (23) so as to cover an interior of said engine room (2B), and having a cooling-air discharge opening (23Ba); and
a guide member (23C) disposed on an inside surface of said bottom guard main body (23B) mounted on said bottom portion (23) which faces the interior of said engine room (2B), so as to cover said cooling-air discharge opening (23Ba), and for guiding the cooling air discharged from said cooling fan (25), from an outer periphery of said cooling fan (25) to said cooling-air discharge opening (23Ba).

2. The bottom guard as set forth in claim 1, wherein a rectifying plate is provided along an axial flow direction (Y), between said bottom guard main body (23B) and guide member (23C).

3. An engine room structure in a construction machine, comprising:
an engine;
a cooling package (24);
a cooling fan (25) for circulating air to cool said cooling package (24); and
the bottom guard (23A) as set forth in claim 1 or 2.

4. A cooling system in a construction machine comprising:
a cooling-air passage provided within an engine room (2B) of the construction machine;
a cooling fan (25) installed within said cooling-air passage for circulating cooling air;
a cooling package (24) installed within said cooling-air passage; and
the bottom guard (23A) as set forth in claim 1 or 2.
